Europäisches Patentamt

European Patent Office

Office européen des brevets

(11) Publication number: **0 144 090
B1**

(12) **EUROPEAN PATENT SPECIFICATION**

(45) Date of publication of patent specification: **07.02.90**

(21) Application number: **84114586.5**

(22) Date of filing: **30.11.84**

(51) Int. Cl.⁵: **B 30 B 9/24**

(54) Method and apparatus for dehydrating sludge.

(30) Priority: **01.12.83 JP 225425/83
11.06.84 JP 119521/84
11.06.84 JP 119522/84
11.10.84 JP 213091/84**

(43) Date of publication of application:
**12.06.85 Bulletin 85/24**

(45) Publication of the grant of the patent:
**07.02.90 Bulletin 90/06**

(84) Designated Contracting States:
**AT DE FR GB SE**

(56) References cited:
| EP-A-0 092 146 | FR-A-2 540 397 |
| DE-A-2 504 406 | GB-A-1 158 359 |
| DE-A-2 823 409 | GB-A-1 447 755 |
| FR-A- 691 625 | GB-A-2 115 714 |
| FR-A-1 579 745 | US-A-1 991 760 |
| FR-A-2 300 603 | US-A-3 110 245 |
| FR-A-2 350 129 | US-A-3 571 849 |

(73) Proprietor: **NIPPON KOKAN KABUSHIKI
KAISHA
1-2 Marunouchi 1-chome Chiyoda-ku
Tokyo 100 (JP)**

(72) Inventor: **Uyama, Kiyoshi
35-5, Chitoseshinmachi
Takatsu-ku Kawasaki-shi (JP)**
Inventor: **Kanno, Yoshio
167-21 Higashikibogaoka
Asahi-ku Yokohama-shi (JP)**
Inventor: **Segawa, Kiyoteru
753-172, Tomioka-cho
Kanazawa-ku Yokohama-shi (JP)**
Inventor: **Kihara, Yasuhiko
2-17-15-303, Yokodai
Isogo-ku Yokohama-shi (JP)**

(74) Representative: **Sajda, Wolf E., Dipl.-Phys. et al
MEISSNER, BOLTE & PARTNER
Widenmayerstrasse 48 Postfach 86 06 24
D-8000 München 86 (DE)**

Courier Press, Leamington Spa, England.

# EP 0 144 090 B1

**Description**

The invention relates to a method of dehydrating sludge comprising the steps of performing a preliminary dehydration by charging wet sludge in a predehydrator and the step of performing a compression dehydration of the sludge of a filter fabric, wherein the step of pelletizing the sludge after the preliminary dehydration by a pelletizer is performed before the step of performing the compression dehydration using the filter fabric.

The invention further relates to an apparatus for dehydrating sludge comprising a preliminary dehydrator which is charged with wet sludge for performing a preliminary dehydration, a pelletizer for pelletizing the sludge, and a compression dehydrator for performing a compression dehydration of the pelletized sludge after the preliminary dehydration with a filter fabric.

A method and an apparatus of this type are known from EP—A—0 092 146. According to this prior art, the conditioned sludge pellets from the pelletizer are supplied to a press for compressing purposes. The press is of the cylinder type using a ram having a large diameter and connected to a piston of an oil-hydraulic cylinder in order to compress the material when the piston moves downward. Also, a perforated plate having a large number of perforations is provided on the bed of the cylinder press, fixed base, and a sheet of filter cloth is laid on the bed for cooperating with the ram.

Accordingly, the compression dehydration is carried out charge by charge without using continuous compression dehydration so that the efficiency of such an apparatus is limited. Also, no excess water separator is provided in this known apparatus.

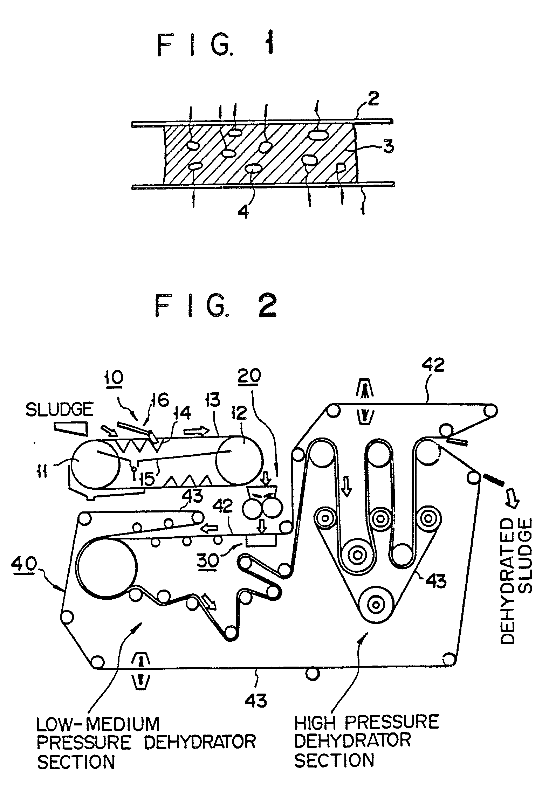

A conventional method is known for dehydrating industrial waste or sludge from a sewage treatment so as to allow easy disposal and facilitate combustion. According to this method, as shown in Fig. 1, a wet sludge 3 is uniformly supplied onto a filter fabric 1 to perform gravity dehydration. Thereafter, the obtained sludge 3 is sandwiched between the filter fabric 1 and another filter fabric 2 to perform compression dehydration. When the sludge 3 is compression-dehydrated by the two filter fabrics 1 and 2, water content 4 in the sludge 3 is removed only in a vertical direction through the filter fabrics 1 and 2 and is not removed in a front-to-rear direction or right-to-left direction. As a result, removal of the filtered water is delayed and the water content in the sludge cannot be decreased beyond a certain degree.

Since the water in the sludge is removed only in the vertical direction through the filter fabrics, when clogging of the filter fabrics 1 and 2 occurs, the water separated from the sludge 3 cannot be easily removed through the filter fabrics 1 and 2.

In addition, when high pressure is applied to the sludge before its water content is decreased to a satisfactory degree, the sludge 3 rolls and leaks from the filter fabrics 1 and 2, thus disabling dehydration.

A conventional dehydration apparatus as shown in Fig. 1 has the following problems:

The first problem is a low dehydration efficiency since only one type of filter fabric is used for both gravity dehydration and compression dehydration of the sludge. In general, a filter fabric having a large filtering area and a large mesh is suitable for gravity dehydration, while a filter fabric having a small mesh is suitable for compression dehydration. In view of this, if only a single type of filter fabric is used for gravity and compression dehydration, the dehydration efficiency is degraded.

The second problem is a low dehydration treatment capacity due to a low gravity dehydration efficiency. As described above, when sludge having a high water content and a high flowability is sandwiched between two filter fabrics and high pressure is applied, the sludge may leak from the filter fabrics. If the gravity dehydration efficiency is low for this reason, the compression dehydration efficiency will be adversely affected. Thus, the overall dehydration treatment capacity is degraded.

The third problem is a low decreasing rate in the water content of the sludge. Since a conventional sludge dehydration apparatus has filter fabrics simply wound around rollers, a maximum compression pressure of only about 2 bar can be applied. This pressure does not result in a satisfactory decrease in the water content of the sludge.

Accordingly, the object underlying the present invention is to provide a method and an apparatus which can improve the dehydration efficiency of sludge and significantly decrease the water content of sludge, which can increase a treatment capacity, and which can prevent leakage of sludge from a filter fabric during compression dehydration.

The method according to the invention is characterized in that an endless filter fabric is used for compression dehydration and in that said step of performing the compression dehydration with the endless filter fabric is performed after the pellets of the sludge have passed through an excess water separator.

The apparatus according to the invention is characterized in that an excess water separator is provided for separating excess water from the pellets supplied by said pelletizer and for supplying the pellets to said compression dehydrator, and in that the compression dehydrator comprises an endless filter fabric.

When such pellets are subjected to compression dehydration using the endless filter fabric according to the invention, the filtered water squeezed out of the sludge is exhausted through gaps between the pellets. Therefore, the exhaust speed of the filtered water is increased, and the dehydration efficiency of the sludge is improved.

This invention can be more fully understood from the following detailed description when taken in conjunction with the accompanying drawings, in which:

2

Fig. 1 is a view illustrating dehydration of sludge according to a conventional method;

Fig. 2 is a schematic view showing the overall structure of an example of a dehydration apparatus according to the present invention;

Fig. 3a is a cross-sectional view showing an example of an agitator according to the present invention;

Fig. 3b is a longitudinal sectional view of the agitator according to the present invention;

Figs. 4 to 7 show another agitator according to the present invention, in which Figs. 4a, 5a, 6a and 7a are longitudinal sectional views of the agitator, and Figs. 4b, 5b, 6b and 7b are cross-sectional views thereof;

Figs. 8a and 8b are views for explaining a sludge dehydration apparatus according to the present invention;

Figs. 9a, 9b, 9c and 9d are views for explaining various types of pelletizers according to the present invention;

Figs. 10a and 10b are views for explaining various excess water separators according to the present invention;

Figs. 11a and 11b are views showing another compression dehydrator according to the present invention, which is different from that shown in Fig. 2;

Fig. 12 is a schematic view showing a sludge dehydration mechanism in the compression step according to the present invention; and

Figs. 13, 14 and 15 are graphs showing changes in the water content of sludge at various points in the dehydration apparatus in Examples 1, 3 and 5, respectively.

A method and an apparatus according to the present invention will be described with reference to each of the following embodiments.

Fig. 2 is a schematic view showing the overall structure of an example of a sludge dehydration apparatus according to the present invention. Referring to Fig. 2, reference numeral 10 denotes a preliminary dehydrator; 20, a pelletizer; 30, an excess water separator; and 40, a compression dehydrator. Sludge is dehydrated by the preliminary dehydrator 10 and pelletized by a pelletizer 20. After excess water in the sludge pellets has been removed by the excess water content separator 30, compression dehydration of the sludge is performed by the compression dehydrator 40 to complete the dehydration treatment.

Preliminary Dehydration

The preliminary dehydrator 10 shown in Fig. 2 performs gravity dehydration. Chains 13 are looped around pairs of sprockets 11 and 12, and are driven in the direction indicated by arrow X. A plurality of U- or V-shaped bag-like filter fabrics 14 each having an opening between the chains 13 are arranged therebetween. A collector 15 for collecting separated water from the sludge is arranged below the upper array of the filter fabrics 14. Wet sludge is continuously supplied into the filter fabrics 14 driven in the direction indicated by arrow X, and gravity dehydration is performed.

An agitator 16 for agitating the sludge in each filter fabric 14 is preferably included in the preliminary dehydrator. If such an agitator is not included, although sludge portions near the filter fabric are well dehydrated, sludge portions at the center of the sludge mass in each filter fabric are not dehydrated sufficiently. Without an agitator, the sludge portions in each filter fabric remain unmoved, and the overall dehydration efficiency of the sludge cannot be improved. When the agitator 16 is included to agitate the sludge in each filter fabric, the positions of the sludge portions are changed, uniform dehydration of the sludge can be performed, and the dehydration efficiency of the sludge can be improved. In addition, when the agitator operates, the agitating force also acts to compress the sludge and this further improves the dehydration efficiency. As a result, after preliminary dehydration, the water content in the sludge is decreased, high pressure can be applied to a compression dehydrator, and the overall dehydration efficiency can be improved.

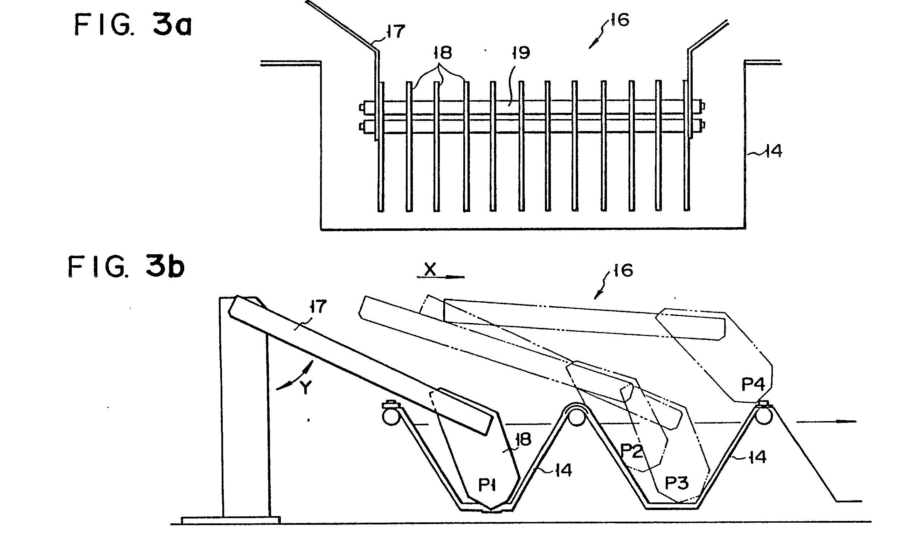

Various types of agitators can be used, and some examples are illustrated in Figs. 3 to 7.

In an agitator 16 shown in Fig. 3, arms 17 are arranged along the longitudinal direction (the direction perpendicular to the moving direction of filter fabrics) of a filter fabric 14, and agitating plates 18 are mounted at distal ends of the arms 17. Shafts 19 are mounted to extend through the agitating plates 18 so as to integrally fix the agitating plates 18 in position. Thus, the arms 17 are capable of movement along the direction indicated by arrow X and pivotal movement in the direction indicated by arrow Y about the proximal ends of the arms. Therefore, the agitating plates 18 inserted in each filter fabric 14 serve to form grooves in the sludge contained therein and to agitate the sludge (e.g., P1, P2, P3 and P4). The agitating plates 18 are moved together with the filter fabric, and a driving source is not required to drive the agitating plates 18.

In this manner, grooves are formed in the sludge portion deposited at the inner periphery of the filter fabric, so that the sludge portions at the center and periphery of the filter fabric are mixed together. Thus, uniform dehydration of the sludge can be performed, and the dehydration efficiency is improved. When the agitating plates 18 are inserted in the sludge, the sludge is compressed, thereby further improving the dehydration efficiency.

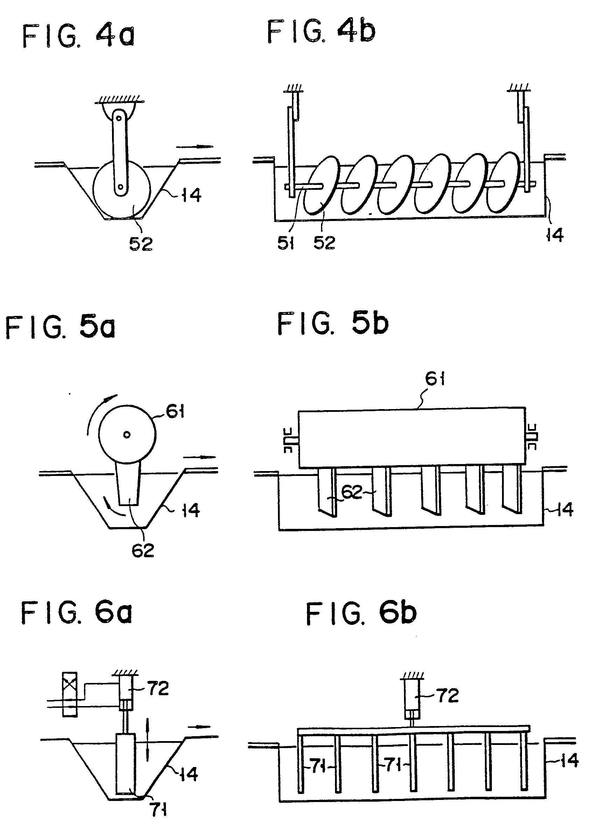

Figs. 4 to 7 show another embodiment of the present invention. In an agitator shown in Fig. 4, a plurality of disks 52 are arranged at predetermined intervals obliquely on a shaft 51 with respect to the shaft 51. The shaft 51 can be rotated or moved vertically. When a filter fabric 14 comes to a predetermined position, the agitator inserts the shaft 51 and the disks 52 into the sludge contained in the filter fabric 14. The disks 52 are rotated to agitate the sludge.

In an agitator shown in Fig. 5, a plurality of agitating plates 62 are linearly arranged on a rotary drum 61. When the agitating plates 62 are directed downward, the agitator is inserted in a filter fabric 14. By synchronizing the travel speed of the filter fabric 14 with the rotational speed of the rotary drum 61, the agitating plates 62 agitate the sludge.

In an agitator shown in Fig. 6, a plurality of agitating plates 71 are arranged linearly along the longitudinal direction of a filter fabric 14. The agitating plates 71 are vertically oscillated by a cam or cylinder 72. The agitating plates 71 agitate the sludge by synchronizing the traveling speed of the filter fabric 14 with the vertical movement of the cylinder 72.

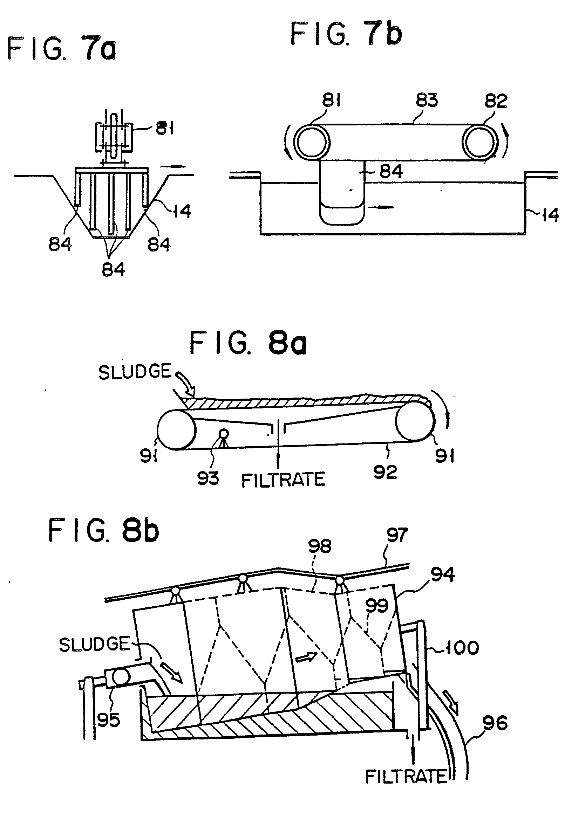

In an agitator shown in Fig. 7, a pair of sprockets 81 and 82 are arranged above a filter fabric 14. A chain 83 is looped around the sprockets 81 and 82. A plurality of agitating plates 84 are arranged linearly along the widthwise direction of the filter fabric 14. The agitating plates 84 agitate the sludge in the filter fabric 14 by synchronizing the movement of the chain 83 with the traveling speed of the filter fabric 14.

The agitators to be used herein are not limited to those described above and can be any agitator which directly or indirectly acts (e.g., vibrates) on the sludge in the filter fabrics to allow uniform dehydration of the sludge.

The preliminary dehydrator is not limited to that described above and can be one shown in Fig. 8a or 8b. Referring to Fig. 8a, a flat filter fabric 92 is looped around a pair of rollers 91. Sludge is placed on the filter fabric 92 and is dehydrated, and the filter fabric 92 after the dehydration process is cleaned by a cleaner 93. Referring to Fig. 8b, a drum thickener is used as a preliminary dehydrator. A sludge supply pipe 95 is arranged at one end of a rotary drum 94, a sludge chute 96 is arranged at the other end thereof, and a screen cleaning pipe 97 is arranged thereabove. Part of the circumferential surface of the rotary drum 94 is defined as a screen 98. Feeding spiral blades 99 are arranged inside the rotary drum 94. A shaft 100 drives the rotary drum 94 to dehydrate the sludge while the sludge in the drum 94 is being fed.

### Pelletizer

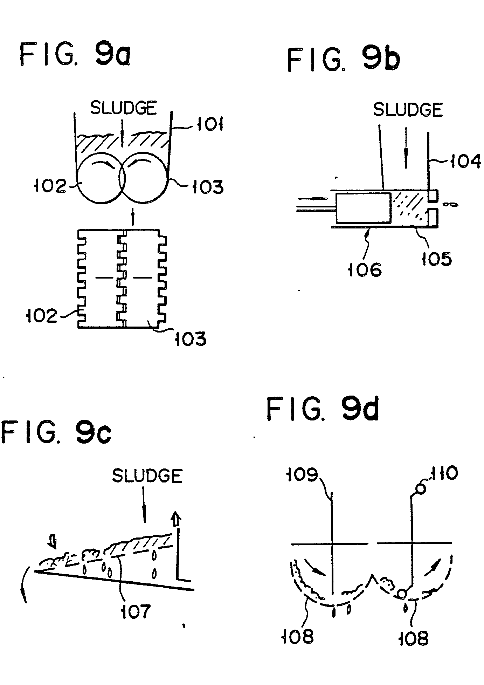

A pelletizer shown in Fig. 9a is a roll-type former and consists of a hopper 101 for holding predehydrated sludge and a pair of rollers 102 and 103 which are arranged below the hopper 101 and which have meshing undulations on their circumferential surfaces. When the rollers 102 and 103 are rotated in the directions indicated by arrows, the sludge in the hopper 101 is pelletized.

Figs. 9b to 9d show other types of pelletizers. A pelletizer shown in Fig. 9b is an extrusion type former and consists of a hopper 104 for holding predehydrated sludge, a cylinder 105 and a piston 106 arranged below the hopper 104. The sludge in the hopper 104 is charged in the cylinder 105, and a piston 106 extrudes the sludge and forms it into a minced form. A pelletizer shown in Fig. 9c is a vibration type former and consists of an inclined punching metal plate or net 107 and a vibrator (not shown) for vibrating the net 107. Sludge is placed on the net 107 which is vibrated, thereby pelletizing the sludge. A pelletizer shown in Fig. 9d is a press dehydration former and consists of a semicylinder 108 having a top opening and made of a punching metal, or scraper 109 for reciprocating on the surface of the semicylinder, and a press member such as a press roller 110. The sludge in the semicylinder 108 is pressed by the scraper 109 or the like to form sludge pellets.

According to the present invention, before or after the sludge is pelletized, one or more dehydration assistants, such as coke dust, coal dust or ash, may be added to the sludge. When a dehydration assistant is used, the dehydration efficiency in the subsequent compression dehydration step is significantly improved.

### Excess Water Separator

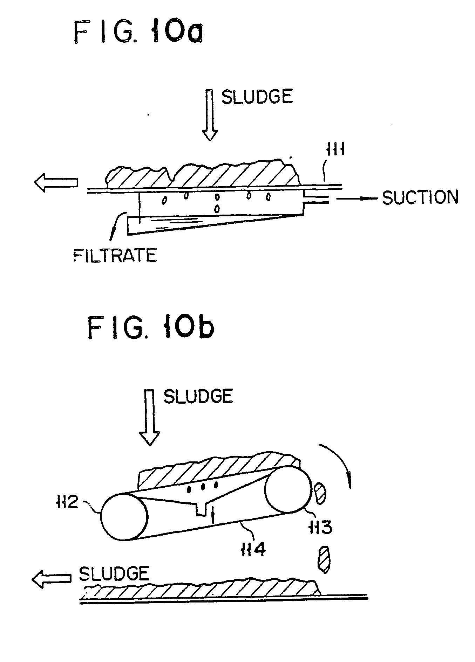

The pellets obtained by the pelletizer are supplied to an excess water separator 30 as needed. The excess water separator 30 may be one as shown in Fig. 10a or 10b. An excess water separator 30 shown in Fig. 10a consists of a filter fabric 111 and a vacuum pump (not shown). Sludge is placed on the filter fabric 111, and a vacuum pressure is applied by a vacuum pump from the lower surface of the filter fabric 111. An excess water separator 30 shown in Fig. 10b has a pair of rollers 112 and 113, and a belt-conveyor type filter fabric 114 having a large mesh. Sludge is placed on the filter fabric 114 and is subjected to gravity dehydration.

### Compression Dehydrator

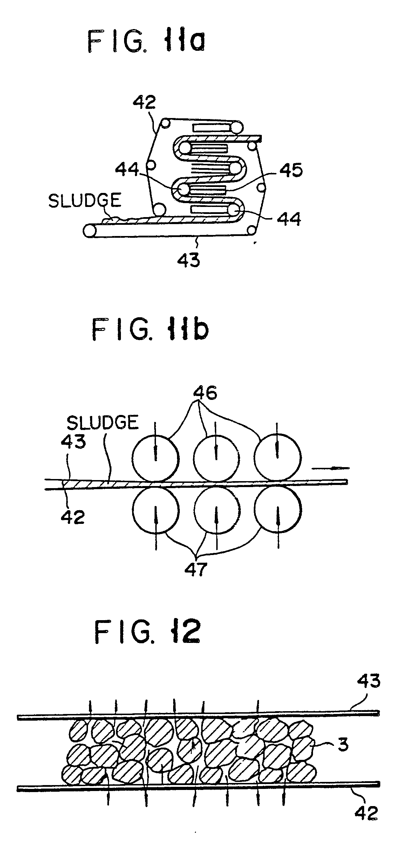

A compression dehydrator shown in Fig. 2 is a belt-press type dehydrator in which sludge pellets are sandwiched between a pair of filter fabrics 42 and 43, and pressure is applied to perform compression dehydration of the sludge. The first half of the dehydrator constitutes a low-medium pressure dehydrator section in which the pressure is gradually increased and dehydration is performed at low to medium pressures, and the second half constitutes a high-pressure dehydrator section in which high-pressure dehydration is performed. In the high-pressure dehydrator section shown in Fig. 2, the filter fabrics 42 and 43 are looped around and changed in direction by a plurality of rollers. The filter fabrics 42 and 43 are thus kept tense to perform high-pressure dehydration. The high-pressure dehydrator section may have a construction as shown in Fig. 11a or 11b. The high-pressure dehydrator section shown in Fig. 11a consists of a plurality of rollers 44 on which filter fabrics 42 and 43 are looped, and a plurality of press plates 45 for applying tension to the filter fabrics 42 and 43. The high-pressure dehydrator section shown in Fig. 11b consists of a plurality of pairs of press rollers 46 and 47, and filter fabrics 42 and 43 sandwiched between the rollers 46 and 47, and sandwiching sludge therebetween.

According to compression dehydration of the present invention, when the water content of sludge is high, the sludge is compressed at a low to medium pressure. As the water content in the sludge is decreased, the sludge is compressed at a higher pressure. Therefore, the water content of the sludge can be reliably decreased, and leakage of the sludge and passage of a sludge through the filter fabrics is prevented.

In the compression dehydration step of the present invention, sludge is formed into pellets. Therefore, the filtered water squeezed in the compression dehydration step is removed externally through gaps between the pellets as indicated by arrows in Fig. 12. Thus, when compared with the conventional dehydration method, the removing speed of the filtered water is faster, and the sludge water content is more quickly decreased. Removing of the filtered water is easy. In addition, since the water content has been decreased to a predetermined value by a pretreatment using a preliminary dehydrator, application of a high pressure does not result in leakage of the sludge from the filter fabrics 42 and 43.

Example 1

Sewage sludge was dehydrated using the sludge dehydration apparatus shown in Fig. 2. The decrease in water content in the sludge was measured in each step. Agitation with an agitator was not performed in the preliminary dehydration step, the excess water separation step was not performed, and a pelletizer shown in Fig. 9a was used in the pelletizing step.

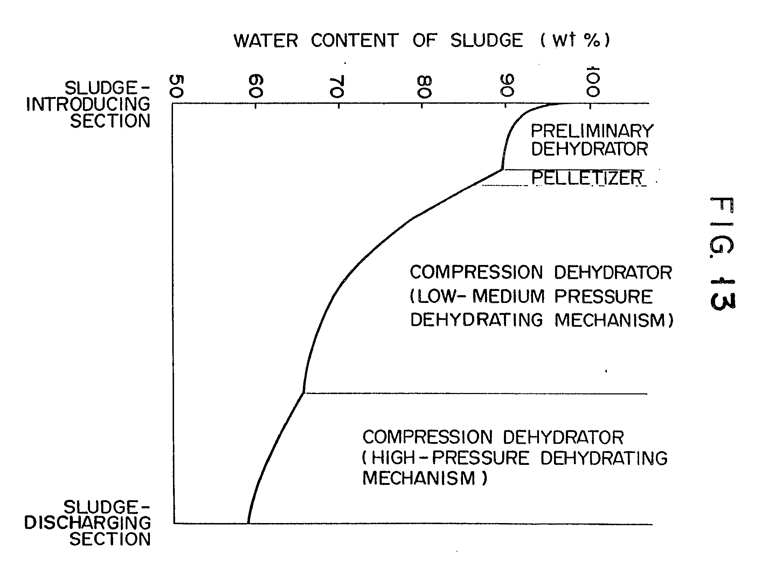

The water content of the sludge was decreased to about 90% by wt. in the preliminary dehydrator. When the sludge was pelletized by the pelletizer, the water content was decreased further by 3 to 4% by wt. When the pellets were charged in the compression dehydrator, a water content of about 65% by wt. was obtained in the low-medium pressure dehydrator section, and a water content of about 60% by wt. was obtained in the high-pressure dehydrator section. The obtained results are shown in Fig. 13.

Example 2

Sewage sludge was dehydrated by three methods: by the conventional method shown in Fig. 1, by the same method as that in Example 1 except that the pressure in the compression dehydration step was kept constant, and by the same method as that in Example 1 except that pellets of sludge were sprinkled with coke dust and the pressure in the compression dehydration step was kept constant. Other conditions remained the same in each method. In the method of the present invention in which the pellets were not sprinkled with coke dust, the water content in the sludge was about 3% by wt. lower than that of the conventional method. The absolute water content in the sludge was also decreased by about 10% by wt. In the method of the present invention wherein the pellets were sprinkled with coke dust, the water content was decreased further, and the absolute water content in the sludge was also decreased. The obtained results are shown below in Table 1.

Table 1

|  |  | Prior art | Present invention (without sprinkling with coke dust) | Present invention (sprinkling with coke dust) |
|---|---|---|---|---|
| Water content * % by wt. | | 68.6 | 65.5 | 58.8 |
| Sludge weight ** | | 100 | 91.0 | 96.0 |
| Content in sludge | Absolute water content (% by weight) | 68.6 | 59.6 | 56.4 |
| | Coke dust content (% by weight) | - | - | 8.2 |
| | Solid content (% by weight) | 31.4 | 31.4 | 31.4 |

* Water content = {water content/(water content + solid content)} x 100

** Sludge weight : The weight of sludge obtained by the prior art method was defined as 100.

Example 3

Sewage sludge was dehydrated using the sludge dehydration apparatus shown in Fig. 2, and decreases in water content were measured in each step. In this case, agitation with an agitator was not performed in the preliminary dehydration step, the pelletizer shown in Fig. 9a was used in the pelletizing step, and the separator shown in Fig. 10a was used in the excess water separation step.

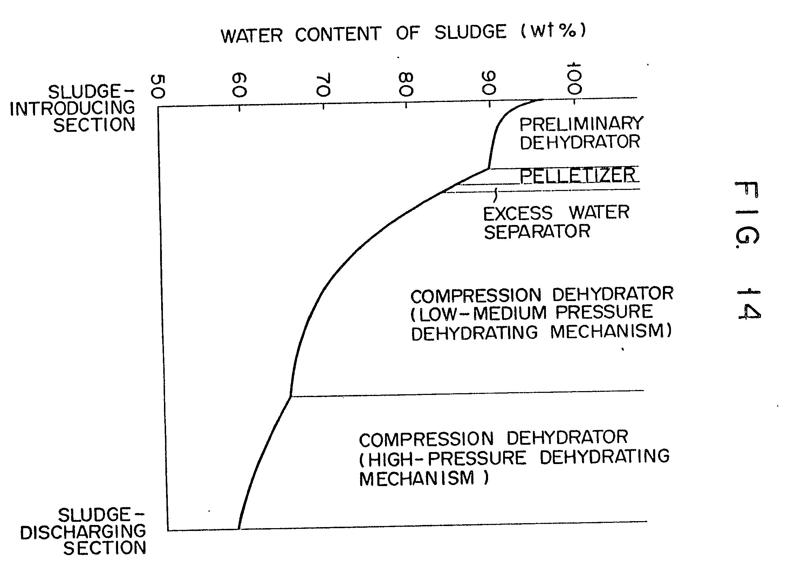

The water content of sludge was decreased to about 90% by wt. in the preliminary dehydrator. When the sludge was pelletized by the pelletizer, the water content was decreased further by 3 to 4% by wt. When the pellets were charged in the compression dehydrator after separation of water content by the separator, a water content of about 65% by wt. was obtained in the low-medium pressure dehydrator section, and a water content of about 60% by wt. was obtained in the high-pressure dehydrator section. The obtained results are shown in Fig. 14.

Example 4

Sewage sludge was dehydrated by three methods: by the conventional method shown in Fig. 1, by the same method as that in Example 3 except that the pressure in the compression dehydration step was kept constant, and by the same method as that in Example 3 except that pellets of sludge were sprinkled with coke dust and the pressure in the compression dehydration step was kept constant. Other conditions remained the same in each method. In the method of the present invention in which the pellets were not sprinkled with coke dust, the water content in the sludge was about 3% by wt. lower than that of the conventional method. The absolute water content in the sludge was also decreased by about 13% by wt. In the method of the present invention wherein the pellets were sprinkled with coke dust, the water content was decreased further, and the absolute water content in the sludge was also decreased. The obtained results are shown below in Table 2.

## Table 2

|  |  | Prior art | Present invention (without sprinkling with coke dust) | Present invention (sprinkling with coke dust) |
|---|---|---|---|---|
| Water content * % by wt. | | 68.6 | 65.5 | 58.8 |
| Sludge weight ** | | 100 | 91.0 | 96.0 |
| Content in sludge | Absolute water content (% by weight) | 68.6 | 65.5 | 58.8 |
| | Coke dust content (% by weight) | - | - | 8.2 |
| | Solid content (% by weight) | 31.4 | 34.5 | 32.7 |

* Water content = {water content/(water content + solid content)} x 100

** Sludge weight : The weight of sludge obtained by the prior art method was defined as 100.

### Example 5

Sewage sludge was dehydrated using the sludge dehydration apparatus shown in Fig. 2, and decreases in water content were measured in each step. In this case, agitation with the agitator shown in Fig. 3 was not performed in the preliminary dehydration step, the pelletizer shown in Fig. 9a was used in the pelletizing step, and the excess water separation was not performed.

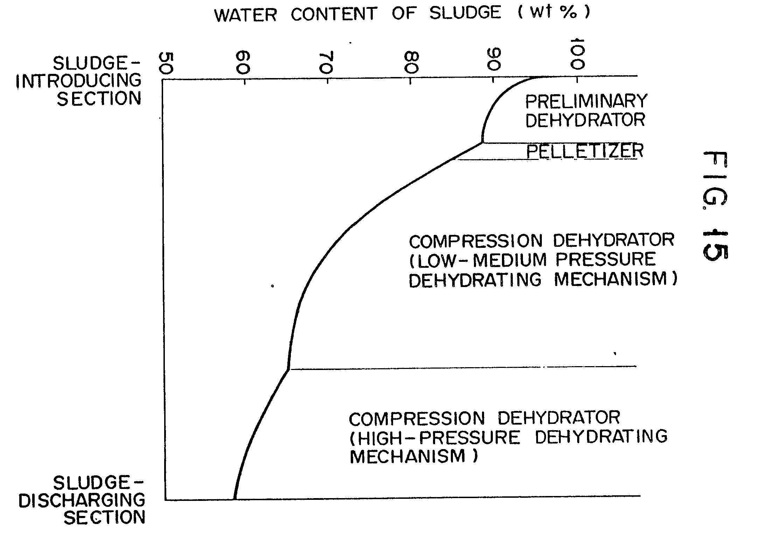

The water content of sludge was decreased to about 89% by wt. in the preliminary dehydrator. When the sludge was pelletized by the pelletizer, the water content was decreased further by 3 to 4% by wt. When the pellets were charged in the compression dehydrator, a water content of about 64% by wt. was obtained in the low-medium pressure dehydrator section, and a water content of about 59% by wt. was obtained in the high-pressure dehydrator section. The obtained results are shown in Fig. 15.

### Example 6

Sewage sludge was dehydrated by three methods: by the conventional method shown in Fig. 1, by the same method as that in Example 5 except that the pressure in the compression dehydration step was kept constant, and by the same method as that in Example 5 except that pellets of sludge were sprinkled with coke dust and the pressure in the compression dehydration step was kept constant. Other conditions remained the same in each method. In the method of the present invention in which the pellets were not sprinkled with coke dust, the water content in the sludge was about 3% by wt. lower than that of the conventional method. The absolute water content in the sludge was also decreased by about 13% by wt. In the method of the present invention wherein the pellets were sprinkled with coke dust, the water content was decreased further, and the absolute water content in the sludge was also decreased. The obtained results are shown below in Table 3.

# EP 0 144 090 B1

Table 3

|  | | Prior art | Present invention (without sprinkling with coke dust) | Present invention (sprinkling with coke dust) |
|---|---|---|---|---|
| Water content * % by wt. | | 68.6 | 65.5 | 58.8 |
| Sludge weight ** | | 100 | 91.0 | 96.0 |
| Content in sludge | Absolute water content (% by weight) | 68.6 | 65.5 | 58.8 |
| | Coke dust content (% by weight) | - | - | 8.5 |
| | Solid content (% by weight) | 31.4 | 34.5 | 32.7 |

\* Water content = {water content/(water content + solid content)} x 100

\*\* Sludge weight : The weight of sludge obtained by the prior art method was defined as 100.

## Claims

1. A method of dehydrating sludge comprising the steps of performing a preliminary dehydration by charging wet sludge (3) in a predehydrator and the step of performing a compression dehydration of the sludge with a filter fabric (42, 43), wherein the step of pelletizing the sludge (3) after the preliminary dehydration by a pelletizer (20) is performed before the step of performing the compression dehydration using the filter fabric (42, 43), characterized in that an endless filter fabric (42, 43) is used for compression dehydration and in that said step of performing the compression dehydration with the endless filter fabric (42, 43) is performed after the pellets of the sludge have passed through an excess water separator (30).

2. A method according to claim 1, characterized in that said step of performing the compression dehydration with the endless filter fabric (42, 43) is performed after at least one dehydration assistant selected from the group consisting of coke dust, coal dust, ash and mixture thereof is added to the pellets of the sludge.

3. A method according to claim 1 or 2, characterized in that in said step of performing the compression dehydration using the endless filter fabric (42, 43), a compression force for dehyration is low during an initial period in which a water content of the sludge (3) is high, and the compression force for dehydration is gradually increased as the water content of the sludge (3) is decreased.

4. An apparatus for dehydrating sludge (3) comprising a preliminary dehydrator (10) which is charged with wet sludge (3) for performing a preliminary dehydration, a pelletizer (20) for pelletizing the sludge (3), and a compression dehydrator (40) for performing a compression dehydration of the pelletized sludge (3) after the preliminary dehydration with a filter fabric, characterized in that an excess water separator (30) is provided for separating excess water from the pellets supplied by said pelletizer (20) and for supplying the pellets to said compression dehydrator (40), and in that the compression dehydrator (40) comprises an endless filter fabric (42, 43).

8

5. An apparatus according to claim 4, characterized in that said preliminary dehydrator (10) comprises a pair of endless chains (13) respectively looped around two pairs of sprockets (11, 12), and a plurality of bag-like filter fabrics (14).

6. An apparatus according to claim 4, characterized in that said preliminary dehydrator (10) comprises a pair of endless chains (13) looped around a pair of drive rollers (11, 12) and a pair of driven rollers, a plurality of bag-like filter fabrics (14) aligned between said endless chains (13), and an agitator (16) for agitating the sludge (3) in said bag-like filter fabrics (14).

7. An apparatus according to claim 6, characterized in that said agitator (16) comprises an arm (17) capable of pivotal and reciprocal movement, and an agitating plate (18) which is mounted on said arm (17) and which is inserted in said bag-like filter fabrics (14) so as to agitate the sludge (3) therein in accordance with movement of said arm (17).

8. An apparatus according to claim 6, characterized in that said agitator (16) comprises a shaft (51) which is vertically movable and is inserted in one of said bag-like filter fabrics (14) upon downward movement, and a plurality of disks (52) which are mounted at predetermined intervals on said shaft (51) at an inclination with respect to a direction perpendicular to said shaft (51).

9. An apparatus according to claim 6, characterized in that said agitator (16) comprises a rotation roller (61) rotating on said filter fabric (14), and a plurality of agitating plates (62) which are aligned on a circumferential surface of said roller (61) at predetermined intervals so as to extend along an axial direction thereof.

10. An apparatus according to claim 6, characterized in that said agitator (16) comprises a lift (72) which is located above said filter fabrics (14), and a plurality of agitating plates (71) which are aligned on said lift (72) along a direction perpendicular to a travelling direction of the filter fabricgs (14) and which are inserted into or withdrawn from said filter fabrics (14).

11. An apparatus according to claim 6, characterized in that said agitator (16) comprises an endless chain (83) which is looped around a pair of rollers (81, 82) located above said filter fabrics (14) and which are moved in a direction perpendicular to a travelling direction of said filter fabrics (14), and a plurality of agitating plates (84) which are aligned on said chain (83) along the travelling direction of said filter fabrics (14) and which are inserted in said filter fabrics (14) when said agitating plates (84) come to a lower portion of said chain (83).

12. An apparatus according to any of claims 4 to 11, characterized in that said preliminary dehydrator (10) comprises a flat filter fabric (92) which is looped around a pair of rollers (91).

13. An apparatus according to any of claims 4 to 12, characterized in that said preliminary dehydrator (10) comprises a drum thickener (94).

14. An apparatus according to any of claims 4 to 13, characterized in that said compression dehydrator (40) comprises a belt-press type dehydrator which performs the compression dehydration between a pair of endless filter fabrics (42, 43).

15. An apparatus according to any of claims 4 to 14, characterized in that said compression dehydrator (40) comprises an endless filter fabric (42, 43) for performing the compression dehydration of the sludge, a plurality of rollers (44) arranged to change a travelling direction of said filter fabrics (42, 43), and a press plate (45) for pressing said rollers (44) to press said filter fabrics (42, 43) travelling with changes in direction.

16. An apparatus according to any of claims 4 to 14, characterized in that said compression dehydrator (40) comprises an endless filter fabric (42, 43) for performing the compression dehydration of the sludge, and a plurality of pairs of rollers (46, 47) arranged to press said filter fabrics (42, 43).

17. An apparatus according to any of claims 4 to 16, characterized in that said pelletizer (20) comprises a hopper (101) for receiving the sludge after the preliminary dehydration of the sludge, and a pair of rollers (102, 103) which have meshing portions on circumferential surfaces thereof and which rotate in mesh with each other, the sludge being supplied to the meshing portions of said rollers (102, 103) to be pelletized.

18. An apparatus according to any of claims 4 to 16, characterized in that said pelletizer (20) comprises a hopper (104) for receiving the sludge after the preliminary dehydration, a cylinder (105) arranged below said hopper (104), and a piston (106) to extrude the sludge in said cylinder (105) to pelletize the sludge.

19. An apparatus according to any of claims 4 to 16, characterized in that said pelletizer (20) comprises a net-like body (107) which is inclined to receive the sludge after the preliminary dehydration, and a vibration source which vibrates said net-like body (107) so as to pelletize the sludge received on said net-like body (107).

20. An apparatus according to claim 19, characterized in that said net-like body (107) is one member selected from the group consisting of a punching metal plate and a net.

21. An apparatus according to any of claims 4 to 16, characterized in that said pelletizer (20) comprises a punching metal semicylindrical body (108) which receives the sludge, and a press member (109, 110) which presses the sludge on said semicylindrical body (108) to pelletize the sludge.

22. An apparatus according to claim 21, characterized in that said press member (109, 110) comprises one member selected from the group consisting of a scraper (109) and a press roller (110).

23. An apparatus according to any of claims 4 to 22, characterized in that said excess water separator (30) comprises a filter fabric (111) for placing the sludge thereon, and a vacuum suction unit for applying a vacuum force from the lower side of said filter fabric (111) to separate the water content of the sludge.

24. An apparatus according to any of claims 4 to 22, characterized in that said excess water separator

9

(30) comprises a pair of rollers (112, 113) and a conveyor filter fabric (114) looped around said pair of rollers (112, 113) and having a large mesh.

**Patentansprüche**

1. Verfahren zum Entwässern von Schlamm, umfassend die Schritte, daß man eine Vorentwässerung durchführt durch Einfüllen des nassen Schlamms (3) in einen Vorentwässerer und daß man eine Druckentwässerung des Schlamms mit einem Filtertuch (42, 43) durchführt, wobei der Schritt des Pelletisierens des Schlamms (3) nach dem Vorentwässern durch eine Pelletisier-Vorrichtung (20) durchgeführt wird, vor der Stufe, bei der die Druckentwässerung unter Verwendung des Filtertuchs (42, 43) durchgeführt wird, dadurch gekennzeichnet, daß ein Endlosfiltertuch (42, 43) zur Druckentwässerung verwendet wird und daß die Stufe, bei der die Druckentwässerung mit dem Endlosfiltertuch (42, 43) erfolgt, durchgeführt wird, nachdem die Pellets des Schlamms einen Überschußwasserabscheider (30) durchlaufen haben.

2. Verfahren nach Anspruch 1, dadurch gekennzeichnet, daß die Stufe, bei der die Druckentwässerung mit dem Endlosfiltertuch (42, 43) durchgeführt wird, erst durchgeführt wird, nachdem mindestens ein Entwässerungs-Hilfsmittel, ausgewählt aus der Gruppe, bestehend aus Koksstaub, Kohlenstaub, Asche und Mischungen davon, zu den Pellets des Schlamms zugegeben wurde.

3. Verfahren nach Anspruch 1 oder 2, dadurch gekennzeichnet, daß in der Stufe, bei der die Druckentwässerung unter Verwendung des Endlosfiltertuchs (42, 43) durchgeführt wird, eine Druckkraft zum Entwässern niedrig ist, während eines Anfangszeitraumes, in dem der Wassergehalt des Schlamms (3) hoch ist, und die Druckkraft zur Entwässerung allmählich ansteigt, wenn der Wassergehalt des Schlamms (3) abnimmt.

4. Vorrichtung zum Entwässern von Schlamm (3), umfassend einen Vorentwässerer (10), der mit nassem Schlamm (3) gefüllt wird zum Durchführen einer Vorentwässerung, eine Pelletisier-Vorrichtung (20) zum Pelletisieren des Schlamms (3) und einen Druckentwässerer (40) zur Durchführung einer Druckentwässerung des pelletisierten Schlamms (3) nach der Vorentwässerung mit einem Filtertuch, dadurch gekennzeichnet, daß ein Überschußwasserabscheider (30) vorgesehen ist zum Abtrennen von Überschußwasser aus den Pellets, die von der Pelletisier-Vorrichtung (20) geliefert werden, und zum Zuführen der Pellets zum Druckentwässerer (40) und daß der Druckentwässerer (40) ein Endlosfiltertuch (42, 43) aufweist.

5. Vorrichtung nach Anspruch 4, dadurch gekennzeichnet, daß der Vorentwässerer (10) ein Paar von Endlosketten (13), die jeweils um ein Paar von Transportzahnrädern (11, 12) geschlungen sind, und eine Vielzahl von sackartigen Filtertüchern (14) umfaßt.

6. Vorrichtung nach Anspruch 4, dadurch gekennzeichnet, daß der Vorentwässerer (10) ein Paar von Endlosketten (13), die um ein Paar von Antriebsrollen (11, 12) geschlungen sind, und ein Paar von angetriebenen Rollen, eine Vielzahl von sackartigen Filtertüchern (14), die zwischen den Endlosketten (13) ausgefluchtet sind, und ein Rührwerk (16) zum Rühren des Schlamms (3) in den sackartigen Filtertüchern (14) umfaßt.

7. Vorrichtung nach Anspruch 6, dadurch gekennzeichnet, daß das Rührwerk (16) einen Arm (17), der hin und her bewegbar und schwenkbar ist, und ein Rührblatt (18), das an dem Arm (17) befestigt ist und das in die sackartigen Filtertücher (14) eintaucht, um den Schlamm (3) darin durch die Bewegung des Arms (17) zu bewegen, umfaßt.

8. Vorrichtung nach Anspruch 6, dadurch gekennzeichnet, daß das Rührwerk (16) eine Welle (51) umfaßt, die vertikal bewegbar ist und in eine der sackartigen Filtertücher (14) bei der Abwärtsbewegung eintaucht, und eine Vielzahl von Scheiben (52) umfaßt, die in vorbestimmten Abständen an der Welle (51) mit einer Neigung bezüglich der Richtung senkrecht zur Welle (51) befestigt sind.

9. Vorrichtung nach Anspruch 6, dadurch gekennzeichnet, daß das Rührwerk (16) eine Rotationswalze (61), die sich oberhalb vom Filtertuch (14) dreht, und eine Vielzahl von Rührblättern (62), die auf einer Umfangsoberfläche der Walze (61) ausgefluchtet sind, in vorbestimmten Abständen, so daß sie sich entlang einer axialen Richtung erstrecken, umfaßt.

10. Vorrichtung nach Anspruch 6, dadurch gekennzeichnet, daß das Rührwerk (16) eine Hubeinrichtung (72) umfaßt, die sich über den Filtertüchern (14) befindet, und eine Vielzahl von Rührblättern (71), die an der Hubeinrichtung (72) entlang einer Richtung senkrecht zu der Laufrichtung der Filtertücher (14) ausgefluchtet sind und die eintauchen in die oder herausgezogen werden aus den Filtertüchern (14).

11. Vorrichtung nach Anspruch 6, dadurch gekennzeichnet, daß das Rührwerk (16) eine Endloskette (83) umfaßt, die um ein Paar von Rollen (81, 82) geschlungen sind, die sich über den Filtertüchern (14) befinden und die in einer Richtung senkrecht zur Laufrichtung der Filtertücher (14) bewegt werden, und eine Vielzahl von Rührblättern (84), die auf der Kette (83) entlang der Laufrichtung der Filtertücher (14) ausfluchtet sind und die in die Filtertücher (14) eintauchen, wenn die Rührblätter (84) zu einem unteren Abschnitt der Kette (83) kommen, umfaßt.

12. Vorrichtung nach einem der Ansprüche 4 bis 11, dadurch gekennzeichnet, daß der Vorentwässerer (10) ein flaches Filtertuch (92) umfaßt, das um ein Paar Rollen (91) geschlungen ist.

13. Vorrichtung nach einem der Ansprüche 4 bis 12, dadurch gekennzeichnet, daß der Vorentwässerer (10) einen Trommeleindicker (94) umfaßt.

14. Vorrichtung nach einem der Ansprüche 4 bis 13, dadurch gekennzeichnet, daß der Druckentwässerer (40) einen Entwässerer vom Banddrucktyp umfaßt, der die Druckentwässerung zwischen einem Paar von Endlosfiltertüchern (42, 43) durchführt.

15. Vorrichtung nach einem der Ansprüche 4 bis 14, dadurch gekennzeichnet, daß der Druckentwässerer (40) ein Endlosfiltertuch (42, 43) zur Durchführung der Druckentwässerung des Schlamms, eine Vielzahl von Rollen (44), die so angeordnet sind, daß sie die Laufrichtung der Filtertücher (42, 43) ändern, und eine Druckplatte (45) zum Pressen der Rollen (44), um die in wechselnden Richtungen laufenden Filtertücher (42, 43) zu pressen, umfaßt.

16. Vorrichtung nach einem der Ansprüche 4 bis 14, dadurch gekennzeichnet, daß der Druckentwässerer (40) ein Endlosfiltertuch (42, 43) umfaßt, zur Durchführung der Druckentwässerung des Schlamms, und eine Vielzahl von Paaren von Rollen (46, 47), die angeordnet sind, um die Filtertücher (42, 43) zu pressen.

17. Vorrichtung nach einem der Ansprüche 4 bis 16, dadurch gekennzeichnet, daß die Pelletisier-Vorrichtung (20) einen Fülltrichter (101) zur Aufnahme des Schlamms nach dessen Vorentwässerung und ein Paar von Walzen (102, 103) umfaßt, die ineinandergreifende Abschnitte auf Umfangsoberflächen davon haben und die im Eingriff miteinander sich drehen, wobei der Schlamm zu den ineinandergreifenden Teilen der Walzen (102, 103) geführt wird, um pelletisiert zu werden.

18. Vorrichtung nach einem der Ansprüche 4 bis 16, dadurch gekennzeichnet, daß die Pelletisier-Vorrichtung (20) einen Fülltrichter (104) zur Aufnahme des Schlamms nach der Vorentwässerung, einen Zylinder (105), der unter dem Fülltrichter (104) angeordnet ist, und einen Kolben (106) zum Extrudieren des Schlamms in dem Zylinder (105) umfaßt, um den Schlamm zu pelletisieren.

19. Vorrichtung nach einem der Ansprüche 4 bis 16, dadurch gekennzeichnet, daß die Pelletisier-vorrichtung (20) einen netzartigen Körper (107) umfaßt, der geneigt ist, um den Schlamm nach der Vorentwässerung aufzunehmen, und eine Vibrationsquelle umfaßt, die den netzartigen Körper (107) in Schwingungen versetzt, um den auf dem netzartigen Körper (107) aufgenommenen Schlamm zu pelletisieren.

20. Vorrichtung nach Anspruch 19, dadurch gekennzeichnet, daß der netzartige Körper (107) ein Teil ist, ausgewählt aus der Gruppe, bestehend aus einer metallischen Lochplatte und einem Netz.

21. Vorrichtung nach einem der Ansprüche 4 bis 16, dadurch gekennzeichnet, daß die Pelletisier-Vorrichtung (20) einen halbzylinderförmigen, perforierten Metallkörper (108) umfaßt, der den Schlamm aufnimmt, und ein Druckteil (109, 110), das den Schlamm auf den halbzylinderförmigen Körper (108) drückt, um den Schlamm zu pelletisieren.

22. Vorrichtung nach Anspruch 21, dadurch gekennzeichnet, daß das Druckteil (109, 110) ein Teil, ausgewählt aus der Gruppe, bestehend aus einem Schaber (109) und einer Druckwalze (110), ist.

23. Vorrichtung nach einem der Ansprüche 4 bis 22, dadurch gekennzeichnet, daß der Überschußwasserabscheider (30) ein Filtertuch (111) zur Aufnahme des Schlamms und eine Vakuum-Saugeinheit umfaßt zum Anlegen einer Vakuumkraft an der Unterseite des Filtertuchs (111), um den Wassergehalt des Schlamms abzutrennen.

24. Vorrichtung nach einem der Ansprüche 4 bis 22, dadurch gekennzeichnet, daß der Überschußwasserabscheider (30) ein Paar Walzen (112, 113) und ein Förder-Filtertuch (114), das um das Paar Walzen (112, 113) geschlungen ist und eine große Maschenzahl hat, umfaßt.

## Revendications

1. Un procédé de déshydratation des boues comprenant les étapes de déshydratation préliminaire par chargement de la boue humide (3) dans un dispositif prédéshydrateur et l'étape de déshydratation par compression de la boue à l'aide d'une toile filtrante (42, 43), procédé selon lequel l'étape de granulation de la boue (3) après la déshydratation préliminaire à l'aide d'un dispositif granulateur (20) est conduite avant l'étape de déshydratation par compression utilisant la toile filtrante (42, 43), caractérisé en ce que l'on utilise une toile filtrante sans fin (42, 43) pour la déshydratation par compression et en ce que ladite étape de déshydratation par compression à l'aide de la toile filtrante sans fin (42, 43) est conduite après passage des granulés de boue à travers un séparateur de l'excès d'eau (30).

2. Un procédé selon la revendication 1, caractérisé en ce que ladite étape de déshydratation par compression à l'aide de la toile filtrante sans fin (42, 43) est conduite après addition aux granulés de boue d'au moins un adjuvant de déshydratation choisi dans le groupe comprenant la poussière de coke, la poussière de charbon, les cendres et leurs mélanges.

3. Un procédé selon la revendication 1 ou 2, caractérisé en ce que dans ladite étape de déshydratation par compression utilisant la toile filtrante sans fin (42, 43), la force de compression pour la déshydratation est faible durant une période initiale pendant laquelle la teneur en eau de la boue (3) est élevée, et la force de compression pour la déshydratation est augmentée graduellement à mesure que la teneur en eau de la boue (3) diminue.

4. Un appareil pour déshydrater les boues (3) comprenant un dispositif déshydrateur préliminaire (10) qui est chargé de boue humide (3) pour réaliser une déshydratation préliminaire, un dispositif granulateur (20) pour granuler la boue (3), et un dispositif déshydrateur par compression (40) pour réaliser une déshydratation par compression de la boue granulée (3) après la déshydratation préliminaire, à l'aide d'une

11

toile filtrante, caractérisé en ce qu'un séparateur de l'excès d'eau (30) est prévu pour séparer l'excès d'eau des granulés alimentés par ledit dispositif granulateur (20) et pour alimenter les granulés dans ledit dispositif déshydrateur par compression (40), et en ce que le dispositif déshydrateur par compression (40) comprend une toile filtrante sans fin (42, 43).

5. Un appareil selon la revendication 4, caractérisé en ce que ledit dispositif déshydrateur préliminaire (10) comprend une paire de chaînes sans fin (13) entourant respectivement deux paires de pignons (11, 12), et plusieurs toiles filtrantes en forme de sacs (14).

6. Un appareil selon la revendication 4, caractérisé en ce que ledit dispositif déshydrateur préliminaire (10) comprend une paire de chaînes sans fin (13) entourant une paire de rouleaux entraîneurs (11, 12) et une paire de rouleaux entraînés, plusieurs toiles filtrantes en forme de sacs (14) alignées entre lesdites chaînes sans fin (13), et un agitateur (16) pour agiter la boue (3) dans lesdites toiles filtrantes en forme de sacs (14).

7. Un appareil selon la revendication 6, caractérisé en ce que ledit agitateur (16) comprend un bras (17) susceptible de mouvements pivotants et alternatifs, et une plaque d'agitation (18) qui est montée sur ledit bras (17) et qui est insérée dans lesdites toiles filtrantes en forme de sacs (14) pour agiter la boue (3) contenue dans ces toiles conformément aux mouvements dudit bras (17).

8. Un appareil selon la revendication 6, caractérisé en ce que ledit agitateur (16) comprend un arbre (51) qui est mobile verticalement et qui est inséré dans l'une desdites toiles filtrantes en forme de sacs (14) lors du mouvement vers le bas, et plusieurs disques (52) qui sont montés à des intervalles prédéterminés sur ledit arbre (51) avec une inclinaison par rapport à une direction perpendiculaire audit arbre (51).

9. Un appareil selon la revendication 6, caractérisé en ce que ledit agitateur (16) comprend un rouleau rotatif (61) tournant sur ladite toile filtrante (14), et plusieurs plaques d'agitation (62) qui sont alignées sur une surface circonférentielle dudit rouleau (61) à des intervalles prédéterminés pour s'étendre le long d'une direction axiale dudit rouleau.

10. Un appareil selon la revendication 6, caractérisé en ce que ledit agitateur (16) comprend un dispositif de levage (72) qui est disposé au-dessus desdites toiles filtrantes (14), et plusieurs plaques d'agitation (71) qui sont alignées sur ledit dispositif de levage (72) le long d'une direction perpendiculaire à une direction de déplacement des toiles filtrantes (14) et qui sont insérées dans lesdites toiles filtrantes (14) ou éloignées de celles-ci.

11. Un appareil selon la revendication 6, caractérisé en ce que ledit agitateur (16) comprend une chaîne sans fin (83) qui entoure une paire de rouleaux (81, 82) disposés au-dessus desdites toiles filtrantes (14) et qui se déplace dans une direction perpendiculaire à la direction de déplacement desdites toiles filtrantes (14), et plusieurs plaques d'agitation (84) qui sont alignées sur ladite chaîne (83) le long de la direction de déplacement desdites toiles filtrantes (14) et qui sont insérées dans lesdites toiles filtrantes (14) lorsque lesdites plaques d'agitation (84) sont dans une portion inférieure de ladite chaîne (83).

12. Un appareil selon l'une quelconque des revendications 4 à 11, caractérisé en ce que ledit dispositif déshydrateur préliminaire (10) comprend une toile filtrante plane (92) qui entoure une paire de rouleaux (91).

13. Un appareil selon l'une quelconque des revendications 4 à 12, caractérisé en ce que ledit dispositif déshydrateur préliminaire (10) comprend un tambour épaississeur (94).

14. Un appareil selon l'une quelconque des revendications 4 à 13, caractérisé en ce que ledit dispositif déshydrateur par compression (40) comprend un déshydrateur du type à presse à courroie qui réalise la déshydratation par compression entre une paire de toiles filtrantes sans fin (42, 32).

15. Un appareil selon l'une quelconque des revendications 4 à 14, caractérisé en ce que ledit dispositif déshydrateur par compression (40) comprend une toile filtrante sans fin (42, 43) pour réaliser la déshydratation par compression de la boue, plusieurs rouleaux (44) agencés pour modifier la direction de déplacement desdites toiles filtrantes (42, 43), et une plaque de presse (45) pour presser lesdits rouleaux (44) et presser lesdites toiles filtrantes (42, 43) se déplaçant avec changement de direction.

16. Un appareil selon l'une quelconque des revendications 4 à 14, caractérisé en ce que ledit dispositif déshydrateur par compression (40) comprend une toile filtrante sans fin (42, 43) pour réaliser la déshydratation par compression de la boue, et plusieurs paires de rouleaux (46, 47) agencés pour presser lesdites toiles filtrantes (42, 43).

17. Un appareil selon l'une quelconque des revendications 4 à 16, caractérisé en ce que ledit dispositif granulateur (20) comprend une trémie (101) pour recevoir la boue après la déshydratation préliminaire de la boue, et une paire de rouleaux (102, 103) qui ont des portions s'engrenant sur leurs surfaces circonférentielles et qui sont entraînés en rotation en s'engrenant l'un avec l'autre, la boue étant alimentés aux portions s'engrenant desdits rouleaux (102, 103) pour être granulée.

18. Un appareil selon l'une quelconque des revendications 4 à 16, caractérisé en ce que ledit dispositif granulateur (20) comprend une trémie (104) pour recevoir la boue après la déshydratation préliminaire, un cylindre (105) agencé sous ladite trémie (104), et un piston (106) pour extruder la boue dans ledit cylindre (105) et granuler la boue.

19. Un appareil selon l'une quelconque des revendications 4 à 16, caractérisé en ce que ledit dispositif granulateur (20) comprend un corps en forme de filet (207) qui est incliné pour recevoir la boue après la déshydratation préliminaire et une source de vibrations qui vibre ledit corps en forme de filet (107) pour granuler la boue reçue sur ledit corps en forme de filet (107).

12

20. Un appareil selon la revendication 19, caractérisé en ce que ledit corps en forme de filet (107) est un élément choisi dans le groupe comprenant une plaque métallique perforée et un filet.

21. Un appareil selon l'une quelconque des revendications 4 à 16, caractérisé en ce que ledit dispositif granulateur (20) comprend un corps semi-cylindrique en métal perforé (108) qui reçoit la boue, et un élément de presse (109, 110) qui presse la boue sur ledit corps semi-cylindrique (108) pour granuler la boue.

22. Un appareil selon la revendication 21, caractérisé en ce que ledit élément de presse (109, 110) comprend un élément choisi dans le groupe comprenant un grattoir (109) et un rouleau de presse (110).

23. Un appareil selon l'une quelconque des revendications 4 à 22, caractérisé en ce que ledit séparateur de l'excès d'eau (30) comprend une toile filtrante (111) pour y placer la boue, et une unité de suction sous vide pour appliquer un vide sur le côté inférieur de ladite toile filtrante (111) pour séparer l'eau contenue dans la boue.

24. Un appareil selon l'une quelconque des revendications 4 à 22, caractérisé en ce que ledit séparateur de l'excès d'eau (30) comprend une paire de rouleaux (112, 113) et une toile filtrante convoyeuse (114) entourant ladite paire de rouleaux (112, 113) et ayant un grand nombre de mailles.

# F I G. 1

# F I G. 2

SLUDGE

DEHYDRATED SLUDGE

LOW-MEDIUM PRESSURE DEHYDRATOR SECTION

HIGH PRESSURE DEHYDRATOR SECTION

# FIG. 3a

# FIG. 3b

# FIG. 4a

# FIG. 4b

# FIG. 5a

# FIG. 5b

# FIG. 6a

# FIG. 6b

FIG. 7a

FIG. 7b

FIG. 8a

FIG. 8b

FIG. 9a

FIG. 9b

FIG. 9c

FIG. 9d

# FIG. 10a

SLUDGE

111

SUCTION

FILTRATE

# FIG. 10b

SLUDGE

112

113

114

SLUDGE

# FIG. 11a

42

44  45

SLUDGE

44

43

# FIG. 11b

46

SLUDGE
43

42

47

# FIG. 12

43

3

42

# FIG. 13

# FIG. 14

# FIG. 15